# EUROPEAN PATENT SPECIFICATION

(11) **EP 3 563 071 B1**
(45) Date of publication and mention of the grant of the patent: **16.12.2020**
(21) Application number: 18769470.8
(22) Date of filing: 17.09.2018
(51) Int. Cl.: F16D 65/00, B60T 17/22, G01L 5/28

(54) **VEHICLE BRAKE HEALTH MONITORING**
BREMSZUSTANDÜBERWACHUNG EINES FAHRZEUGS
SURVEILLANCE DE L'INTÉGRITÉ DES FREINS D'UN VÉHICULE

(30) Priority: 15.09.2017 WO PCT/GB2017/052750; 15.03.2018 GB 201804187
(43) Date of publication of application: 06.11.2019
(73) Proprietor: Edwards, Kenneth, Leicester, Leicestershire LE16 7UN (GB)
(72) Inventor: Edwards, Kenneth, Leicester, Leicestershire LE16 7UN (GB)
(74) Representative: Adamson Jones
(86) International application number: PCT/GB2018/052648
(87) International publication number: WO 2019/053470

(56) References cited:
- EP-A1- 0 075 064
- WO-A1-2008/028826
- FR-A3- 2 934 343
- GB-A- 2 236 562
- US-A- 5 892 437
- US-A1- 2008 119 117

## Description

### BACKGROUND OF THE INVENTION

This invention concerns systems and methods for monitoring, testing and/or maintaining vehicle brakes, e.g. for the purpose of maintaining the performance of a vehicle's brakes throughout their operational life at a level at which they can generate the retarding force necessary to meet the statutory requirement for vehicle deceleration.

Much good work has been done to improve the performance of brakes with the result that the only major brake-related problem which vehicle operators currently have to contend with is the build-up of low friction films on the working surfaces of the brakes. These films, known in the industry as "glaze", are formed by environmental pollutants combining with thermoplastic elements which have migrated from within the friction materials. They present a problem because they can seriously reduce the retarding force which a vehicle's brakes can generate.

The statutory annual roadworthiness test for a vehicle includes a brake performance test but, because there can be serious deterioration in the performance of a vehicle's brakes in the period between annual tests, vehicle operators are required to carry out further periodic tests. These periodic tests may need to be carried out four times per year or more and present a burden for vehicle operators.

The two types of braking systems in current use on road vehicles are disc brakes and drum brakes. Disc brakes have fixed friction pads and rotating metal discs, and drum brakes have fixed friction linings and rotating metal drums. Each type of brake operates by generating frictional grip between the working surfaces of the fixed and the rotating members thereby allowing the fixed members to apply a retarding torque to the rotating members. This retarding torque is transmitted to the tyres to generate a vehicle retarding force at the interface between the tyres and the road surface.

Vehicle braking systems are normally designed to provide retarding forces which can decelerate a vehicle, at any load, by about 6 metres per second per second (6m/sec²) when the working surfaces of the brakes are in prime condition. When a vehicle is in service the build-up of glaze on the working surfaces of its brakes gradually reduces the retarding forces which the braking system can generate. The statutory requirement is that the braking system must be capable of decelerating the vehicle by a minimum of 5 metres per second per second (5m/sec²). Hence there is normally a safe operating range of brake system performance within which it can decelerate a vehicle by a rate between 6m/sec² and 5m/sec².

Currently the only way brake performance can be maintained at or above this minimum level is by replacing the friction materials on the working surfaces of the brakes when glaze has reduced the brake system's deceleration capability to 5m/sec² although at that stage they may they have utilised less than half their full wear life.

Document US 5 892 437 A concerns a method and system of testing vehicle brakes according to the state of the art.

From a commercial standpoint, it is noted that replacement of friction materials before the end of their maximum possible working life results in increased sales of those materials. Thus there has been little commercial motivation to-date to resolve problems associated with the build-up of glaze.

One specific problem is that the current rules assess compliance only at the point of testing vehicle brakes, which means that the tests are required to be performed at the aforementioned regular intervals. A vehicle operator can continue to operate a vehicle with unsafe brakes without penalty, provided the brake friction material is changed immediately prior to a vehicle brake test, at which point the brakes will be deemed compliant.

Furthermore, spot checks performed by the authorities responsible for policing adherence to vehicle brake testing requirements can only be performed on a very small percentage of vehicles. The results of such spot checks reveal that a significant percentage of vehicle operators are not complying fully. This means that vehicle operators are currently allowing vehicles on the road with brakes that may not be able to generate the required retarding force, particularly in the event of an emergency. The risk for injury or death due to degraded brake performance must be reduced.

It is an aim of the invention to provide a system for mitigating one or more of the above-identified problems. It may be considered an additional or alternative aim to improve the manner in which vehicle brake performance can be assessed/monitored.

### BRIEF SUMMARY OF THE INVENTION

According to one aspect of the invention, there is provided a method of vehicle brake performance management, as claimed in claim 1, comprising: performing vehicle brake testing in order to output a measure of current vehicle brake effectiveness; inserting said measure of current vehicle brake effectiveness into a mathematical model for predicting a decline of braking effectiveness with vehicle usage; determining a point at which said predicted decline crosses a threshold value of vehicle brake effectiveness; and outputting an indication of vehicle usage corresponding to said crossing point.

The method comprises outputting a brake test schedule for the vehicle, e.g. a scheduled period/extent of vehicle usage before a further brake test is required. The vehicle usage may comprise vehicle travel distance and/or duration/period of vehicle use.

The method may comprise outputting an alert when the extent of vehicle usage is approaching, met or exceeded. The method may comprise outputting an alert when a predicted or measured extent of usage is approaching, met or exceeded.

The decline of braking effectiveness may be modelled as a curve e.g. using the mathematical model. The mathematical model may or may not comprise a mathematical definition of a curve. The curve may comprise a portion/arc of a circle or ellipse.

The decline of braking effectiveness is modelled based on a plurality of vehicle brake test results.

The mathematical model, e.g. one or more parameter thereof, may be updated using each vehicle brake test result.

A log of the mathematical model, e.g. comprising one or more parameter value thereof, may be kept for each vehicle and/or each vehicle brake test result. A log of an equation defining the predicted decline in brake performance, e.g. comprising one or more parameter value thereof, may be kept.

A vehicle brake test result log may be maintained for each vehicle. A central log may be maintained for multiple vehicles and updated based on vehicle brake test results at a plurality of different locations.

The indication of vehicle usage may comprise an indication of acceptable vehicle usage lying within the threshold value of vehicle brake effectiveness. The method may comprise retrodicting a historical decline in vehicle brake effectiveness and a past point or extent of vehicle usage for which said decline crosses a threshold value of vehicle brake effectiveness.

According to a further aspect of the present invention, there is provided a system of vehicle brake performance management, as claimed in claim 13, comprising: one or more vehicle brake testing system arranged to output a measure of current vehicle brake effectiveness; a data store comprising vehicle identifiers and a log of historic vehicle brake test results for each vehicle identifier, the data store arranged to be updated with test results for each test performed by the vehicle brake testing system; a vehicle brake monitor arranged to receive the vehicle brake test results and to process the test results in accordance with a mathematical model in order to predict a decline of braking effectiveness with vehicle usage, wherein the vehicle brake monitor determines a point at which said predicted decline crosses a threshold value of vehicle brake effectiveness and outputs an indication of vehicle usage corresponding to said crossing point.

Communication between the vehicle brake testing system and the data store may be automated upon completion/performing of a vehicle brake test.

Examples of the method/system of the invention may record any, any combination, or all of the following:
(a) brake performance at relatively low (e.g. considerably below peak brake performance) brake pressures;
(b) the peak brake performance before the application of instantaneous shear force (e.g. calculated by extrapolation from brake performance at low brake pressures);
(c) the peak brake performance after the application of instantaneous shear force;
(d) the predicted rate of decline of brake performance after each application;
(e) the rate of build-up of retarding force when instantaneous brake-line pressure is applied;
(f) the performance of each brake on the vehicle over the whole working life of the vehicle.

This invention may not require any changes to the brake performance test performed by a vehicle operator as part of its routine/annual test, the purpose of which is simply to measure brake performance. Further, interim tests, if carried out due to the operation of the present invention, may be used to restore brake performance, at least in part, by removing some or all of the glaze which caused the deterioration in performance.

The invention is particularly suited to commercial vehicles, such as heavy goods vehicles.

### BRIEF DESCRIPTION OF THE DRAWINGS

Certain embodiments of the invention will now be described with reference to the accompanying drawings, in which:
Figure 1 shows by Line 3 a typical pattern of decline in brake effectiveness when a vehicle is in service and by Lines 5 and 6 the safe operating range of brake effectiveness 4.
Figure 2 shows different patterns of decline in brake effectiveness for different vehicles or different vehicle usage scenarios.
Figure 3 shows an example of a mathematical definition of the decline in brake effectiveness.
Figure 4 shows an example of a modelled decline in brake effectiveness derived from vehicle brake test results.
Figure 5 shows by Line 12 brake effectiveness being maintained within an upper sector 13 of the safe operating region 4.
Figure 6 shows by Line 14 brake effectiveness being raised by applications of a glaze removal procedure which only partially removes the glaze that accumulates in the time between applications.
Figure 7 shows by Line 17 the predicted rate of decline of brake effectiveness after an application of a glaze removal procedure. It also shows the vehicle travel 18 at which a further application would be required to keep brake effectiveness within upper sector 13 and the vehicle travel 19 at which a further application would be required to keep brake effectiveness within the safe operating range.
Figure 8 shows an example of a vehicle's brake effectiveness record.
Figure 9 shows schematically an end view of a force applicator 33 in engagement with a pull-down fixture 31 fitted to axle 32.
Figure 10 shows a side view of force applicators 33 mounted on shaft 24 and engaging axle 32.
Figure 11 shows, within the enlarged section of the safe operating range of the brake 4, the increasing rate of build-up of retarding force achieved by glaze removal as the brake-line pressure approaches 6.5 bar.

### DETAILED DESCRIPTION OF THE INVENTION

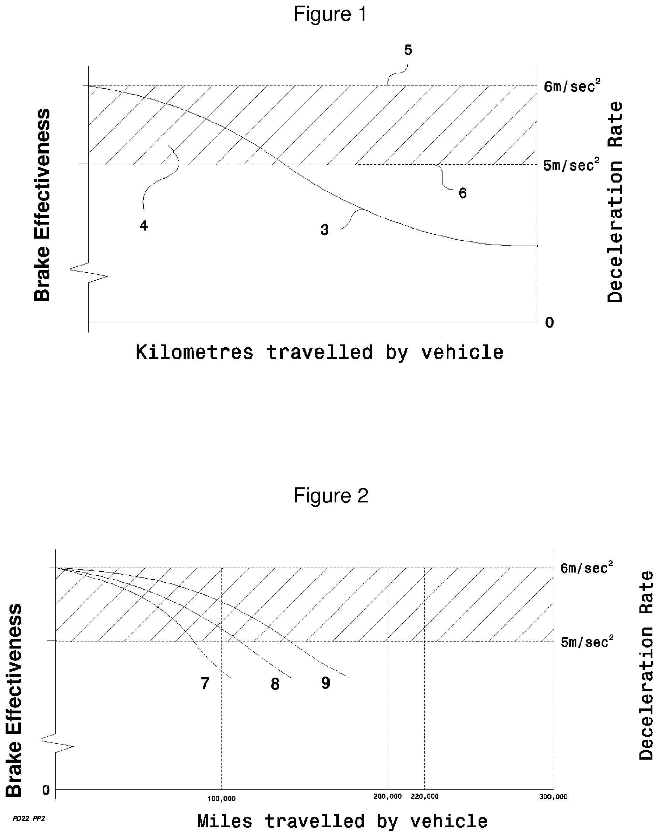

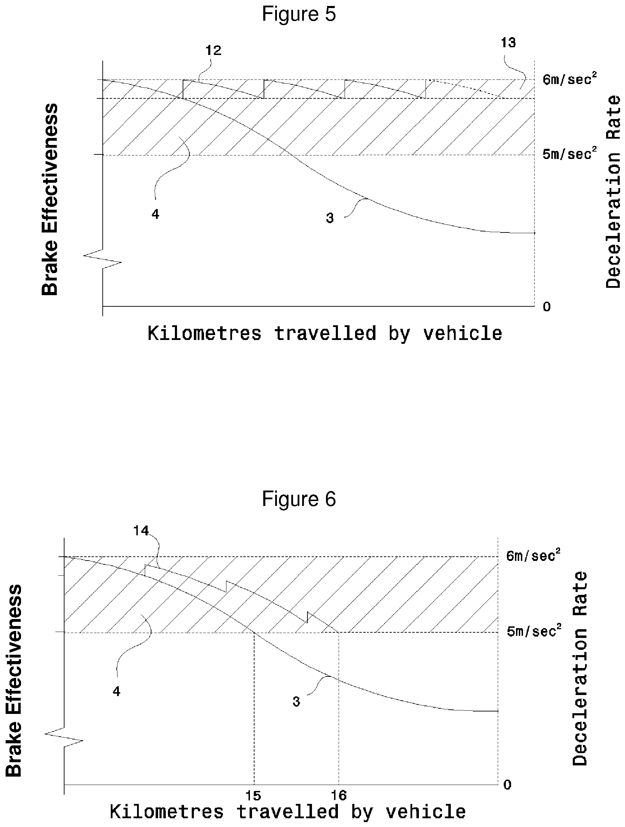

Our research has found:
- that glaze build-up on the working surfaces of a brake when the vehicle is in service depends upon a number of factors, the main ones being the pattern of braking and the glaze resistance of the friction material.
- that the decline in brake effectiveness, as shown in Figure 1, is in the form of an S-curve. The rate of decline, per kilometre of vehicle travel, is initially low but increases by a factor of 3 or more as the glaze builds up to the level at which brake effectiveness drops out of the safe operating region. Once the S-curve for a particular vehicle is known the future path of decline in brake effectiveness can be predicted.
- the decline of brake effectiveness may be predicted using a mathematical algorithm or model, e.g. by fitting the decline to a predetermined plot or mathematical expression of the type shown in Figure 1. A polynomial expression could for example be used to define the brake effectiveness decline.
- that the current/measured brake effectiveness may be an input into the model and that the relevant curve can be modelled mathematically by extrapolating from available test results so as to predict future brake effectiveness levels.
- that it is less important to model the lower portion of the S-curve and a mathematical model can be simplified to predict the upper portion of the curve for the purpose of assessing decline of the brake towards an unacceptable level.
- that a mathematical model for predicting brake effectiveness decline can accommodate a glaze removal operation, e.g. as shown in Figures 5 to 7, and can predict the vehicle travel at which the next application of the procedure would be required to maintain brake effectiveness.
- that brake performance can be measured before and after each application of instantaneous shear force for glaze removal. Software may be used to predict the path of decline in brake effectiveness after a glaze removal application. The mathematical model of brake effectiveness decline can be re-run after glaze removal, if required, and can provide a means of monitoring brake effectiveness over the whole life of a vehicle, whether or not glaze removal operations are employed.

### Implementation of the Research Findings

Using a conventional roller brake tester, it is possible to generate results of current break performance at the time the test is performed. In a conventional scenario the future decline of vehicle break performance is not known. If conventional vehicle brake tests are performed at different points in time, the brake performance results can be logged against the vehicle travel distance retrospectively. However there is no current way of predicting future decline or being certain of when vehicle brake material has been changed. Furthermore, the same brake line pressure, and/or rate of increase of brake line pressure, may not be used for each test and so it can be difficult to meaningfully compare test results against the legal requirements for vehicle deceleration under braking.

The approach described herein processes the vehicle test data results, i.e. the measured brake performance data, and applies a mathematical model so as to generate a continuous path of decline representing the effectiveness of the brakes over a period of use, e.g. the whole, or a part, of the operation life of the brakes.

In the present example, a roller brake tester is used to generate a measure of the retarding force achieved for each wheel by the vehicle brakes. At the time of test, the following will also be recorded: the weight carried by the wheel(s) under test; the maximum weight that the wheel/vehicle is authorised to carry; and the brake line pressure applied during the test. The brake line pressure reading provides a measure of the degree to which the brakes were applied during the test.

A computer processor processes this input data using software according to an example of the present invention to:
a) calculate by extrapolation the retarding force the brake could provide at a predetermined brake line pressure, i.e. where the predetermined brake line pressure value is different from the brake line pressure used during the test. Extrapolation may be performed on the assumption that braking force increases predictably with increasing brake line pressure. A mathematical model may comprise an algorithm/expression that defines the relationship between brake line pressure and braking force. In this example, the calculation is performed to determine the retarding force that would be provided at a brake line pressure of 6.5 Bar.
b) calculate the rate of deceleration that could be achieved by the brake at the predetermined brake line pressure if the wheel is carrying the maximum weight that it is authorised to carry. This calculation is performed for the brakes at the tested condition, i.e. to provide a current value of deceleration.
c) generate a path of decay according to a mathematical model, using the calculated rate of deceleration. The mathematical model may also use one or more further value for the rate of deceleration that has been previously calculated, e.g. as an earlier rate of decay calculated at an earlier brake test event.

The mathematical process may be summarised as (i) the conversion of raw test data to vehicle deceleration data so as to provide a value of vehicle brake effectiveness, and (ii) the use of the determined deceleration data within a mathematical model to generate or update a path of decay of brake effectiveness for the vehicle brakes.

The following description proceeds in relation to the definition of a suitable mathematical model for determining a decline in brake effectiveness with vehicle use.

Figure 1 shows by Line 3 an examplepattern of decline in brake effectiveness when a vehicle is in service. A mathematical expression may be fitted to the precise shape of the curve. This would represent the decline of break effectiveness for a single instance of brake friction material and its mode of use.

Figure 1 also shows hatched area 4 the safe operating range between Line 5, the brake effectiveness required to decelerate a vehicle by 6m/sec², and Line 6, the brake effectiveness required to decelerate the vehicle by 5m/sec². Whilst the line 6 has a specific threshold value of vehicle deceleration here, it will be appreciated that the specific value could be changed within the scope of the invention according to a predetermined level required for brake acceptability. Thus it is possible to determine a point at which brake effectiveness will deteriorate to an unacceptable level, e.g. where the line 3 crosses the lower threshold of the hatched area 4

Different vehicles, friction materials and behaviour by the driver (e.g. how aggressively/frequently the brakes are used) will all impact the shape of the curve 3. Each vehicle would thus have its own specific curve/path of decline. Figure 2 shows an example of three such different paths 7, 8, 9. However the paths will have a similar shape and so it is possible to collectively model all paths using a common approach.

A family of curves can represent different friction materials and/or vehicle usage profiles/scenarios by altering one or more variable in a mathematical expression, e.g. to accommodate some variation in brake decline according to known or predictable operation parameters for the brake system.

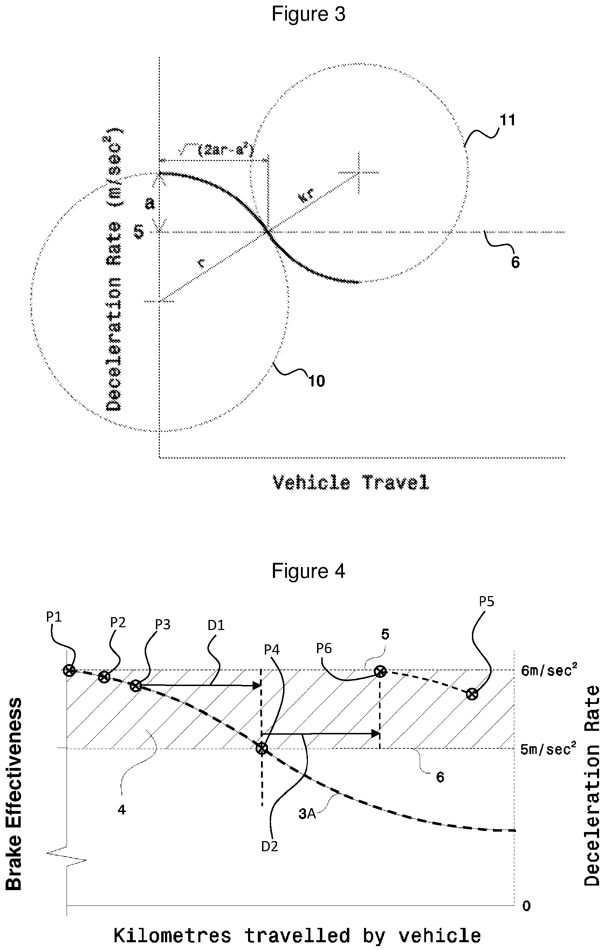

Turning to Figure 3, there is shown one example of a mathematical model which uses one or more circular arc to determine the path of decline in brake effectiveness. In the model of Figure 3, a first circle 10 is used to define the initial portion of the decline, e.g. above the threshold 6, and a second circle 11 is used to define the latter portion of the decline, e.g. below the threshold 6. The first circle has its centre on the y-axis of a graph of deceleration rate against the extent of vehicle usage, as shown in Figure 3.

The concept of using a circular arc has been found to be highly practical in that:
(i) all paths of decay can be described by sectors of two touching circles: a first circle 10 of radius "r", with its top-dead-centre at a brake performance of (threshold + a) where "a" is the amount by which brake effectiveness exceeds the threshold 6 (in this example 5 m/sec²); and a second circle 11, which touches the first circle at the threshold level of brake effectiveness and has a radius of "kr" where "k" is number close to 1 but is not necessarily exactly 1.
(ii) all paths above threshold 6 can come from the first circle 10;
(iii) all paths below threshold 6 can come from the second circle 11;
(iv) the paths differ from each other only in that they have different radii.
(v) even without any prior knowledge of the vehicle or its brakes, all the paths can be generated from only three test results; or from only two test results if one of them provides a measure of top-dead-centre performance;
(vi) if the brake friction material has been changed and the brake effectiveness decline for the previous brake material is available, the path of decline for the current brake friction material can be generated from 1 test result.

Whilst it is possible to model the full decline in this manner, the initial portion of the path of decline prior to crossing the threshold 6 is of primary importance for most applications, since the operation of the brake should be maintained so as to be above the threshold when in service. Thus the model could comprise only the path defined by the first circle 10 in some examples of the invention.

The procedure for determining the path of decay in brake effectiveness for a new vehicle can be as follows. The initial friction material on its brakes will be in pristine condition and so the first brake test on each brake will determine the top-dead-centre value of that brake. This, together with a second test result will allow the initial path of decay in the brake's effectiveness - a path extending from the top-dead-centre value down to a performance of 5m/sec² - to be calculated. The test results and the path of decay can be logged as a vehicle brake record.

Thereafter a path of decay will be calculated at each, later brake test and will remain in place on the brake's records, at least until it is replaced by a path calculated from the next test result for the same friction material. A third test result together with the first and second test results, will allow a more accurate path of decay to be calculated, e.g. as a path of best fit that accommodates the three points. From the fourth test onwards a best-fit path will be calculated from all test results available at that stage. The path generated at the final test on the initial friction material will be retained as a permanent record and a copy of it will be carried forward to provide a measure of the effectiveness of the initial friction material at any vehicle travel distance.

In this way, the model can provide a model for the path of decline that is continuous and as accurate as possible at each brake test.

Whilst a circular arc has been used in the example above, it is possible to define a mathematical expression for any mathematical relationship that best represents a path or predicted plot for brake effectiveness against the extent of use of the vehicle braking system (represented by the vehicle travel distance in this example), which includes the plurality of available points that were derived from actual measured test results. A suitable polynomial expression may be generated to best match the available data. In other examples, it could be that a straight line definition for the path of decay could be used.

In Figure 4, a suitable curve 3A has been generated using the available points P1, P2 and P3 that are taken from brake test results.

The resulting curve 3A thus represents the expected decline in performance/effectiveness in friction material of the brakes (e.g. due to glaze build-up). The point at which the brake effectiveness will become unacceptable is represented by the point P4, i.e. the point at which the curve 3A crosses the minimum threshold line 6. This may also be described as the point at which the curve 3A exits the acceptable region 4.

The extent of vehicle usage between the current brake test result P3 and the predicted threshold point P4 can thus be calculated as the value D1, e.g. by subtracting the current travel distance of the vehicle at point P3 from the predicted threshold travel distance at P4.

This information can be used to generate an output signal indicating, or derived from, the remaining allowable extent of vehicle usage before the threshold is reached. This output may be used to generate any or any combination of:
- an indication of when the next vehicle brake test must be performed, e.g. represented as a limit within which the next test must be performed, according to the value D1. The next test may be scheduled to coincide with the value D1, or shortly in advance of D1
- an indication of when a vehicle brake test/inspection or maintenance operation must be performed, e.g. to coincide with D1, or shortly in advance.
- an indication of when vehicle brake friction material must be changed, e.g. to coincide with D1, or shortly in advance.

Since a primary aim of the present disclosure is to help ensure compliance with the requirement to maintain a minimal acceptable level of brake performance, the modelling of the entire S-curve shape may not be required and instead only an upper portion of the S-curve may need to be predicted, e.g. as a simpler arc/curve. The mathematical model may thus only model the curve in a region where the reduction in brake effectiveness is accelerating, e.g. prior to a point at which the rate of decline is constant or else decelerating (as shown in the lower half of the curve in Figure 4).

In one example, the relevant portion of the curve can be modelled according to a trigonometric relationship between the points P1, P2 and P3 so as to defines a portion/arc or a circle or ellipse that passes through those points. This example is used for ease of explanation only and it will be appreciated that other mathematical relationships could be used according to the level of accuracy with which the decline in brake performance is to be modelled.

The use of three points P1, P2 and P3 in this example is sufficient to define a single circle/ellipse containing those points. By selecting a point that is equidistant from each of the three points (or as close to equidistant as possible) the centre of a circle can be defined, whereby the radius is represented by the distance from any of P1, P2 or P3 to the equidistant point.

As described above, it is possible that only two points could be used to generate the predicted path of decline, e.g. if the first test is conducted when new friction material is installed on the vehicle brake, such that the first point represents a maximum value, i.e. the top dead centre point of the path that is aligned with the y-axis.

In another example, if the friction material of the brake has been changed and the historical decline in brake effectiveness for the previous friction material for that brake is available, then it is possible to apply the previously recorded decline to the new material. It is envisaged that a single test result for the new material could be used to define a single point for the new path of decline. Then the previous decline can be superimposed onto the single point to provide a new predicted path of decline for the current friction material. It has been found that the sequential decline for new friction material on the same vehicle brake system follows a very similar path to the previous friction material and so this technique can provide an accurate prediction of the path of decline even at the first brake test.

In any examples, the techniques described herein have been found to provide a highly accurate approximation of the decline in brake effectiveness with vehicle use that can predict a point at which the brake effectiveness will become unacceptable/illegal.

The output of this technique may additionally/alternatively be used to monitor a vehicle operator's adherence to the minimum brake effectiveness threshold. For example, if a vehicle operator does not have a subsequent brake test performed and logged before point P4 shown in Figure 4, but instead only has a test performed at P5 (i.e. after the friction material has been changed), then, under an existing conventional approach, the brakes would be deemed currently safe and there would be no way to demonstrate non-compliance with the minimal threshold between P3 and P5.

However using the modelled brake decline 3A, where new brake friction material is fitted and immediately tested at P6, the test result can be used to infer that the friction material has been changed since the performance compared to P3 has not decayed in the predicted manner. Even if the new brake material test is not logged, a comparison of P5 with P3 will immediately indicate a discrepancy between the expected and actual values.

Furthermore the extent of vehicle use (i.e. the vehicle travel distance), can be compared to the predicted allowable extent at P4 and the difference D2 there-between determined. This difference can thus be calculated to indicate retrospectively the extent of vehicle usage D2 during which the brake performance was below the minimum threshold 6. In this way the model can be used predictively or retrospectively to determine a continuous path for the brake effectiveness.

Even if the brake performance is not tested upon fitting new brake friction material (e.g. if an unscrupulous vehicle operator attempts to avoid detection), the testing of the brakes at a later routine test (e.g. at point P6) can still be used to infer a period of use in which the vehicle brakes were below the minimal threshold 6. For example, the curve generated prior to P4 can be transposed/translated in the x-axis direction until it includes the point P6. Then the curve can be followed retrospectively until it hits a maximum threshold (e.g. a maximum value of brake performance recorded for new brake friction material). Thus it can be retroactively determined when the brake friction material was changed (i.e. the extent of vehicle use between P5 and P6), and the value of D2 can be determined as described above.

Whilst this provides examples of a simplistic, but operable, modelling technique, there are many further details that may be considered. For example, rather than a precise point P4, the mathematical model may output a range or zone over which the brake performance is predicted to cross the minimum threshold. In one example a normal distribution may be applied to the possible points around P4 and suitable bounds on the relevant range may be selected. In another example different brake usage scenarios may be expressed as a percentage tolerance on the determined value of D1, e.g. according to best case and worst case scenarios of friction material abrasion through use. In yet another example, different curve definitions may be determined for best and worst case scenarios by altering the mathematical algorithm according to either the available brake test results (P1, P2, P3) or else by altering parameter values for a parameterised definition of a family of curves.

In another example, which is in many ways preferred for simplicity, a simple tolerance may be applied to the predicted point P4, e.g. expressed as a percentage discrepancy from P4 that might still be considered to lie within a normal mode of vehicle brake use.

In such examples, a zone in which the threshold is predicted to be crossed may be determined and/or recorded.

Future brake tests may compare the test result with the predicted point P4, or the value of the path of decline 3A at the point at which the vehicle test is performed, for compliance. A degree of mismatch which falls within the allowable tolerance may be accepted, whereas a mismatch which is outside of the allowable tolerance may cause an alert to be generated.

Similar thresholds/zones may be determined retrospectively, e.g. when modelling previous brake performance as described above in relation to point P6.

The approach described above may be used with the intention to avoid penalising vehicle operators who may have unintentionally encroached on a marginal zone of use which could be unsafe. Instead an unsafe and/or reprimandable period of vehicle use may only be determined with respect to a zone which lies beyond a region of tolerance around the determined point P4.

When using the methods described herein after the initial definition of the path of decline has been generated, at every subsequent vehicle brake test a new point on the graph of vehicle brake effectiveness will be created. The existing path of decline may be compared with the new point to determine whether or not there is a match (e.g. within an acceptable degree of tolerance).

Additionally or alternatively, the existing path of decline may be updated to accommodate the new point. It is envisaged that the path of decline may be adjusted such that it is a best fit using all of the available points from test results. In this way the path of decline is updated to represent the best estimate of future decline using the available test data. This ensures ongoing accuracy of the modelling process. However it has been found that, even without this updating process, the modelling techniques described herein can still provide an accurate prediction of the decline in braking effectiveness with ongoing vehicle usage.

At the end of the life of vehicle brake friction material, there will have been numerous interim brake tests, and thus numerous further points logged with the path of decline. Thus at the end of life of the friction material, there will be a complete history of the decline in braking effectiveness available. This can be logged for the vehicle and potentially used to inform future modelling of braking effectiveness for that vehicle using new friction material. Furthermore, the amassed data for multiple vehicles can be used to verify or update the modelling process in the future. Trends between different makes/models of vehicles, brake materials and/or modes of use of vehicles may be identified and accounted for.

In order to implement the scheduling/monitoring methods described above, it will be appreciated that a central database of vehicle test performance data will be maintained. The entries in the database for the above-described examples will comprise at least a vehicle identifier (e.g. a conventional vehicle identifier/registration), a logged travel distance for the vehicle at the point of test, the brake test results and/or a derived brake effectiveness indicator derived from the test results.

The processing of the results to generate the curve 3 may be performed by a brake test controller/processor programmed to model brake performance as described above, or else may be performed by a central authority (e.g. the authority managing the central database) and the output communicated to the brake test system or else the vehicle operator directly. Conventional communication technologies and protocols may be used for communicating the relevant information/alerts to the vehicle operator. Furthermore, an conventional computing device/resource may be used to perform the mathematical modelling.

A graphical output or plot of predicted vehicle brake performance, e.g. of the type shown in any one of Figures 4-8, may be output, displayed and/or communicated to the vehicle operator. This may provide context for the accompanying information, e.g. the scheduled future vehicle brake testing/maintenance event or alert.

This system provides improved records of brake performance and means by which vehicle operators can be informed of their obligations. The system also provides means by which vehicle operator behaviour can be assessed, e.g. retrospectively. Although various different mathematical modelling processes have been described herein, with each potentially offering varying degrees of accuracy, all such processes are better than conventional methods that do not allow for the prediction and use of a continuous path of decline of brake effectiveness.

### Implementation with Glaze Removal Process

The above described techniques may be employed using a standard vehicle brake testing procedure. Conventionally brake performance is measured via a roller brake tester using a procedure by which brake line pressure is applied slowly at a rate of 1 bar per second or less whilst the rollers are rotating. The procedure does not provide a measure of the retarding force which can be instantaneously available in an emergency.

It has been found that applying shear force very rapidly (e.g. instantaneously) using a roller brake tester can provide a means of measuring the speed at which a brake can generate retarding force. This may be achieved by measuring the time required for the retarding force to rise from a trigger level to a higher level such as the level at which it peaks. The speed at which a brake can generate retarding force is so important that it should be an integral part of all brake tests because:
(a) the only retarding force of any value in an emergency is that which is immediately available;
(b) balanced braking requires all brakes to act together simultaneously and this is possible only if they can generate retarding force at similar rates;
(c) it provides an early warning of the need to check for problems such as flow restrictions in pressure pipe lines, the malfunctioning of valves and the incorrect adjustment of slack adjusters.

It has also been found that glaze on the working surfaces of a brake can, by the application of instantaneous shear force - as distinct from the slow application of shear force currently used for brake tests - be abraded into particulates which can be removed by gravity or airflow whilst the brake is in situ on a vehicle. In contrast, the slow application of braking force used when performing conventional brake tests serves to warm the friction material and reduce the susceptibility of the glaze to abrasion.

The amount of glaze which can be removed by each application of shear force is dependent upon a number of factors, the main ones being the magnitude of the shear force, its rate of build-up when applied, the temperature at which it is applied, the thickness of the glaze at the time it is applied, and the speed of rotation of the drive rolls. The amount will increase with increases in the magnitude of the shear force, the rate of build-up of shear force and the speed of rotation of the drive rolls, and will decrease with increases in temperature and glaze thickness.

Figures 5 and 6 show the monitoring/modelling of a safe working life of the friction materials on the working surfaces of brakes being extended by use of a glaze removal process. The glaze removal process is performed using a vehicle brake test system as will be described below. Thus it is possible to produce vehicle brake test performance results at the time of glaze removal.

Figure 5 shows by Line 12 brake performance of lightly glazed friction materials being maintained within an upper sector 13 of the safe operating region 4 by applying a glaze removal procedure when the amount of glaze which has accumulated can be removed in a single application of the glaze removal procedure. Removing glaze early in its formation, when brake performance is at a high level, is effective in that it removes it when it is building up slowly and consequently when each unit quantity of glaze removed provides the maximum distance of safe travel for the vehicle.

Figure 6 shows by Line 14 brake performance being raised at each brake test by a glaze removal procedure which only partially removes the glaze which has accumulated since a previous glaze removal procedure, e.g. between tests. Although partial removal does not prevent a decline in brake performance it can significantly reduce vehicle operating costs by extending the safe working life of the friction materials from point 15 to point 16.

For each scenario of Figures 5 and 6, a plurality of vehicle brake tests may have been carried out prior to glaze removal and so the decline in brake performance may have been previously modelled. Accordingly, with the vehicle brake test results providing a current brake performance value, the predicted decline in brake effectiveness can be extrapolated using the model/curve already available for the vehicle brakes, starting from the current brake effectiveness value. Thus, even if the current brake effectiveness level after deglazing is below a maximum level previously recorded for this vehicle brake material, the future decline in brake performance can still be extrapolated.

A count of deglazing processes performed on the friction material of the brakes may be logged with the brake test results. The deglazing count may feed into the mathematical model. For example the count of deglazing processes may influence whether an output of the modelling process schedules a brake test, deglazing process or a change in the brake friction material, and the associated timing of the relevant event.

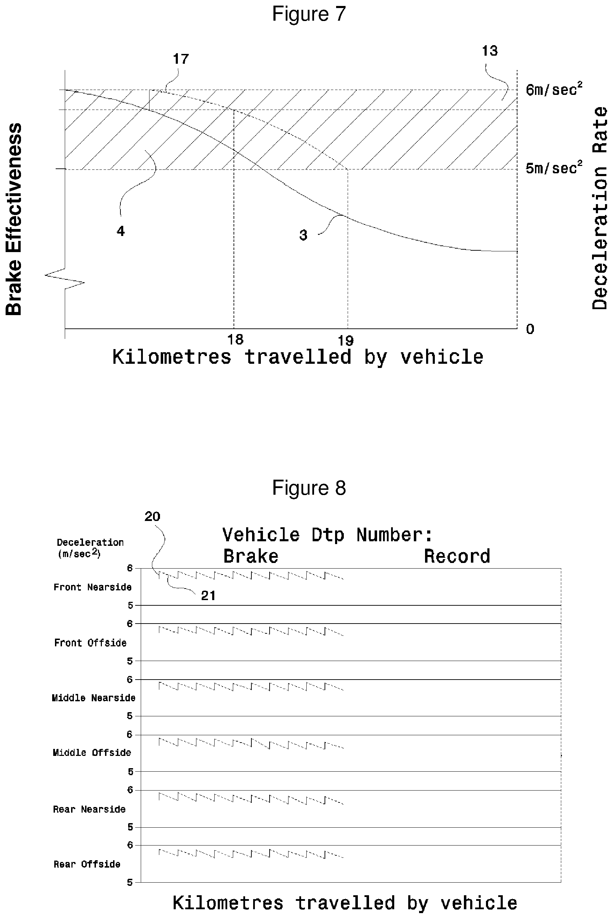

Figure 7 shows by line 17 the predicted rate of decline of brake effectiveness after an application of a glaze removal procedure. It provides vehicle operators with a guide as to the vehicle travel 18 at which the next application will be required to keep within the upper sector 13 and the vehicle travel 19 at which the next application will be required to keep brake effectiveness in the safe operating region 4. Using this approach, a next glaze removal procedure and/or test can be scheduled for the vehicle, whereby point 18 represents an optimal point of glaze removal and point 19 represents a hard deadline for ensuring vehicle safety. By keeping a log of such data for a vehicle, the historic behaviour of the vehicle operator and the brake performance history can be retrieved at a later date.

Figure 8 shows an example of a vehicle brake record made possible by applying shear force instantaneously. By lines 20 it records, for each of the six brakes of a three-axle vehicle, the brake effectiveness before and after each brake test, and by Lines 21 the predicted decline in brake effectiveness in the time between each of the tests. Forty entries of three-monthly test data will provide a record of brake effectiveness over a vehicle operating life of 10 years.

Whilst the vehicle distance travelled is used as a measure of the extent of brake use in the above examples, it will be appreciated that other measures, e.g. time or vehicle usage time, could alternatively be used if desired. Scheduling of a future event could rely on scheduled dates, e.g. assuming normal vehicle usage over the relevant time period. Other measures of vehicle/brake usage could be explored provided the required sensors are available onboard a vehicle.

The following description proceeds in relation to an example of a vehicle brake testing system, in this example also comprising a deglazing process - although the deglazing process need not be used in other examples.

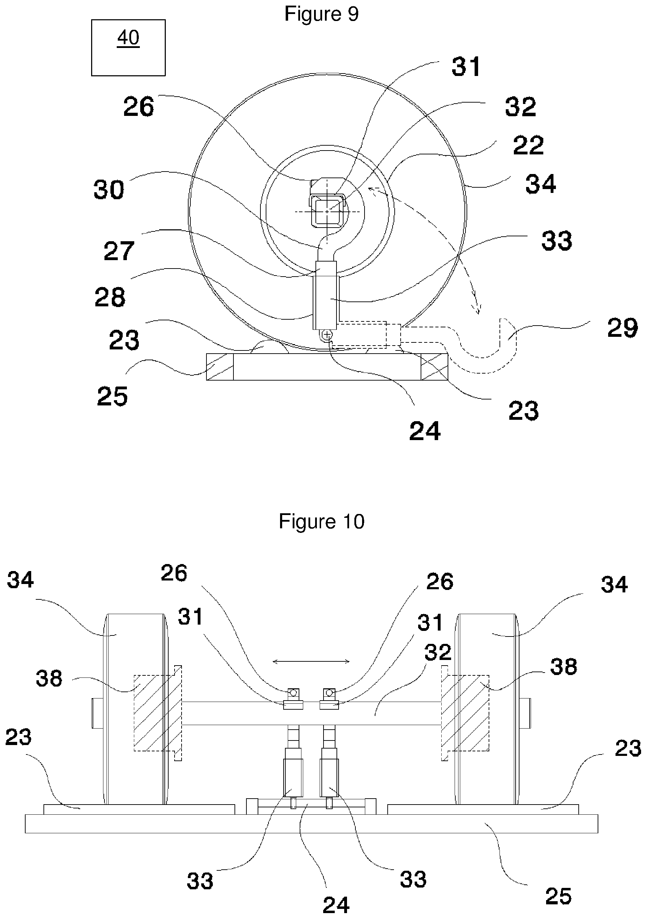

In Figure 9, tyre 34 of wheel 22 is shown in position on drive rolls 23 of a roller brake tester. A controller 40 receives sensor data for the test procedure, including a measure of the retarding force experienced upon use of the vehicle brakes in attesting rotation of the wheels 2 by the drive rolls 23.

Figure 10 also shows an end view of a force applicator 33 in engagement with pull-down fixture 31 fitted to axle 32. Force applicator 33 consists of an outer member 28, an inner member 27 and a pull-down device 30. Axle 32 carries a brake mechanism 38 (shown dotted in Figure 9) which is to be subjected to a glaze removal procedure to remove glaze from the working surfaces of the brake.

Force applicator 33 is fixed to shaft 24 and is free to move in 3 axes to allow it, by the application of well-known computer controlled electric, hydraulic or pneumatic means, to be moved along the shaft; to be rotated around the shaft; and to have its length adjusted by the axial movement of its inner member 27 relative to its outer member 28. It can thereby move from its retracted position 29 (shown by dotted lines) to a position where engagement device 30 is safely in engagement with a pull-down fixture 31.

When safe engagement has been achieved inner member 27 is retracted into outer member 28 thereby applying pull-down force to pull-down device 30 to bring the load on wheel 22 and hence the grip between drive rolls 23 and tyre 34 to the level required for applying the desired level of shear force to the working surfaces of the brake mechanism.

Figure 10 shows two force applicators 33 mounted on shaft 24 and engaging axle 32. There will be one or more pull-down fixtures 31 fitted onto, or near to, each axle of the vehicle.

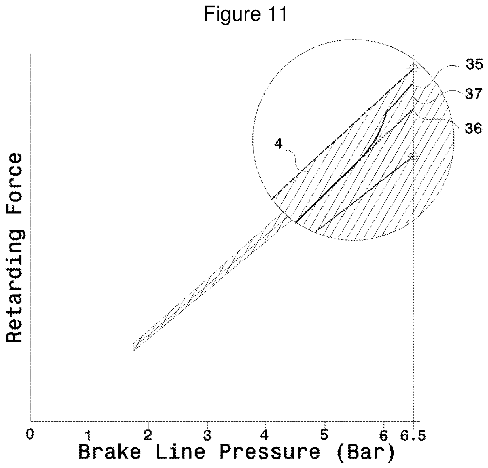

Figure 11 shows, within the enlarged section of the safe operating range 4, the increasing rate of build-up of retarding force achieved by glaze removal as the brake-line pressure approaches 6.5 bar, the maximum pressure normally available on vehicles. It shows the retarding force rising to point 35 and it also shows the lower retarding force 36 which would have been available if glaze removal had not been applied. The increase 37 in retarding force from 36 to 35 provides a measure of the improvement in brake performance obtained by deglazing, e.g. corresponding to the increases in brake performance shown in Figures 5-7.

The deglazing process will be carried out on a mobile or fixed roller brake tester which has a computer/controller 40 running a plurality of modules of machine readable code, e.g. in the form of one or more software application or program. The controller can optionally run either of: a standard brake test program, and a combined deglazing and test program. The combined program will output instructions to the operator to apply brake-line pressure in an instantaneous manner to perform deglazing. The controller may monitor and record this process as described in further detail below. In some other examples, the controller may control one or more operational variable of the process. It is envisaged that adoption of the invention will initially rely on use of existing roller brake testing hardware, e.g. such that the controller outputs instructions for manual operator implementation.

The roller brake tester will have access (either within the tester memory, or connected thereto over a local or wide area network) a data store comprising all relevant details of the vehicle carrying the brakes to be tested and/or deglazed so that the tester can identify the vehicle and perform read/write operations to the records for the vehicle. The results will typically be communicated to a central data store and monitoring facility for processing in the manner described herein. However the controller 40 could equally perform the relevant data processing steps and modelling of the brake performance curve if required.

### Potential Advantages

The invention may be useful in allowing extrapolation of a measure of vehicle brake effectiveness between tests, either in advance or retrospectively. The invention may allow a future prediction of when the brake effectiveness will become unacceptable. This may be used to schedule a next brake test for the vehicle or maintenance/replacement of vehicle brake friction material. Additionally or alternatively, if vehicle brakes have been changed and are tested, resulting in the current brake effectiveness being acceptable, the invention may allow identification of a window of historic vehicle use in which the vehicle brake effectiveness either was, or was not, acceptable.

Instead of a regular, routine brake testing cycle, the invention may allow a dynamic vehicle brake testing schedule to be produced that is specific to the vehicle in question and its own specific set of brake test results. That is to say the permissible extent of vehicle use between tests or maintenance events may differ from vehicle to vehicle instead of being a predetermined/fixed value common to all vehicles.

The invention may reduce the need for frequent brake tests for vehicle operators. The accurate prediction of brake performance decline may negate the need for some or all interim tests and may instead schedule a suitable test event shortly before the vehicle brakes are predicted to become non-compliant.

Whilst the paths of decline for different vehicles may differ, it has been found that the subsequent paths for a single vehicle are extremely similar to the preceding curve. Therefore, after a first curve for a vehicle is determined (and/or verified by subsequent tests), the same mathematical expression or shape of curve can be used for later curves. After deglazing, brake friction material replacement or other brake maintenance work, all that is required is the immediate test of the brakes to determine the current maximum brake performance. Then the preceding curve can be fit to the new/current maximum value of brake effectiveness (e.g. by removing any portion of the preceding curve above the new maximum value).

Thus the curve can be transposed onto the current brake effectiveness to predict future decline according to the existing model. That is to say, the path for a vehicle is consistent and so the path for one set of friction material can safely be used to predict the path for the next set and/or subsequent sets thereafter.

Paths for the safe break effectiveness zone can simply be modelled as segments of circles of varying radii if desired. Once the relevant radius for any particular vehicle's brakes have been determined, as few as 2 or 3 tests at low vehicle travel increments can determine long term performance of brakes.

The results generated using the invention:
(a) can be used by friction material manufacturers to design optimum material formulations for classes of vehicles
(b) can be used by vehicle operators to determine the optimum materials for each class of vehicle. The system/method described herein can also be useful to vehicle operators in helping them to define and select the friction materials which best meet their needs in terms of initial performance, rate of decline in performance and ease of glaze removal.
(c) can be used by regulatory authorities to monitor brake compliance.
(d) can reduce the number of tests required - one when new friction material is fitted and a further on just before that material needs to be replaced.
(e) can be used in conjunction with glaze removal or other brake maintenance work.
(f) can allow the maximum amount of safe use of friction material to be realised, with less uncertainty, such that it is not needed to remove friction material earlier than necessary.

The monitoring methods and systems disclosed herein may be helpful in designing friction material formulations which are glaze-resistant in the short-term and hopefully glaze-free in the longer term. Currently there is no commercial incentive for friction material manufacturers to develop glaze-resistant materials. Providing vehicle operators with ready means of predicting the safe vehicle travel distances for the various friction materials available may stimulate competition between friction material suppliers.

Linking test results by providing a continuous measure of brake effectiveness between tests will solve the problem of "rouge" operators. Knowing that there will be a permanent record of any period in which any vehicles have operated unsafely - a record available to traffic commissioners (who issue permission to operate); to insurers and to the police and the Courts - will be a very persuasive deterrent to such vehicle operators.

Potential benefits of the invention may reach beyond the immediate safety concerns and monitoring of vehicle brakes and may additionally/alternatively provide the industry with a very powerful tool to stimulate further invention.

## Claims

1. A method of vehicle brake performance management, comprising:
performing a vehicle brake test using a roller brake tester in order to output one or more measure of brake performance under one or more test condition;
using said measure of brake performance to generate a value of current vehicle brake effectiveness for a predetermined usage condition;
applying a mathematical model to said value of current vehicle brake effectiveness so as to predict a decline in braking effectiveness with vehicle usage;
determining via said mathematical model a point at which said predicted decline crosses a threshold value of vehicle brake effectiveness; and
outputting an indication of the extent of vehicle usage corresponding to said crossing point.

2. The method of claim 1, wherein the one or more test condition comprises a vehicle weight value and applied brake line pressure value.

3. The method of claim 2, wherein the predetermined usage condition comprises a maximum permissible vehicle weight value and/or fixed brake line pressure and wherein generating the measure of current vehicle brake effectiveness comprises receiving one or more value of any, any combination, or all of:
a distance of travel for the vehicle;
a weight carried by a vehicle wheel under test;
a maximum permissible weight for the wheel or vehicle under test;
a brake line pressure applied during the test;
a the retarding force achieved during the test.

4. The method of any preceding claim, wherein said indication comprises a vehicle usage value or limit for performing a further vehicle brake test, the usage value being determined at said crossing point or a predetermined amount in advance of said crossing point.

5. The method of any preceding claim, comprising determining retrospectively a point at which said predicted decline has previously crossed the threshold value and/or determining retrospectively an extent of vehicle usage at which the brake performance was below the threshold value.

6. The method of any preceding claim, wherein the mathematical model comprises a polynomial definition of the decline of braking effectiveness, such as a first or second order polynomial and provides a continuous path of the decline in braking effectiveness with vehicle usage.

7. The method of any preceding claim, wherein the decline in braking effectiveness is modelled as a portion of the circumference of a circle or ellipse.

8. The method of any preceding claim, wherein the decline in braking effectiveness is determined using a plurality of measures of vehicle brake effectiveness from a corresponding plurality of different brake tests, said decline being defined by the mathematical model as a best fit path incorporating said plurality of measures of vehicle brake effectiveness.

9. The method of any preceding claim, wherein said mathematical model and/or path of decline is updated using a further measure of vehicle brake effectiveness from a further brake test.

10. The method of claim 9, wherein the mathematical model is adaptive and/or automatically updates the path of decline to accommodate a received further measure of vehicle brake effectiveness.

11. The method of any preceding claim, wherein applying the mathematical model comprises applying a previously recorded decline in braking effectiveness generated for previously used brake friction material.

12. The method of any preceding claim, comprising recording a rate of build-up of retarding force generated by the vehicle brake during the vehicle brake test.

13. A system for vehicle brake performance management, comprising:
one or more roller brake testing system for a vehicle, said roller brake testing system arranged to output a measure of current vehicle brake effectiveness;
a data store comprising vehicle identifiers and a log of historic vehicle brake test results for each vehicle identifier, the data store arranged to be updated with test results for each test performed by the roller brake testing system; **characterised by**
a vehicle brake monitor arranged to receive the vehicle brake test results and to process the test results in accordance with a mathematical model in order to predict a decline of braking effectiveness with vehicle usage,
wherein the vehicle brake monitor determines a point at which said predicted decline crosses a threshold value of vehicle brake effectiveness and outputs an indication of vehicle usage corresponding to said crossing point.

14. A data carrier comprising machine readable instructions for control of a vehicle brake monitoring system controller to:
receive a vehicle brake test result and an associated vehicle identifier from one or more vehicle roller brake testing system;
retrieve from a data store one or more historic vehicle brake test result for the received vehicle identifier;
process the received vehicle brake test result and the one or more historic vehicle brake test result in accordance with a mathematical model in order to predict a decline of braking effectiveness with vehicle usage; and
determine a point at which said predicted decline crosses a threshold value of vehicle brake effectiveness.

15. A vehicle roller brake tester comprising a controller and the data carrier of claim 14.

## Patentansprüche

1. Verfahren zum Management von Fahrzeugbremsleistung, umfassend:
Ausführen einer Fahrzeugbremsprüfung unter Verwendung eines Rollen-Bremsprüfstands, um einen oder mehrere Messwerte von Bremsleistung unter einer oder mehreren Prüfungsbedingungen auszugeben;
Verwenden dieses Messwerts von Bremsleistung zum Erzeugen eines Werts von aktueller Fahrzeugbremswirkung für eine vorbestimmte Nutzungsbedingung;
Anwenden eines mathematischen Modells auf den von aktueller Fahrzeugbremswirkung, um eine Abnahme der Bremswirkung mit der Fahrzeugnutzung vorherzusagen;
Bestimmen, über das mathematische Modell, eines Punkts, an dem die vorhergesagte Abnahme einen Schwellenwert von Fahrzeugbremswirkung überquert; und
Ausgeben einer Angabe über das Ausmaß der Fahrzeugnutzung entsprechend dem Überquerungspunkt.

2. Verfahren nach Anspruch 1, wobei die eine oder die mehreren Prüfungsbedingungen einen Fahrzeuggewichtswert und einen angewendeten Bremsleitungsdruckwert umfassen.

3. Verfahren nach Anspruch 2, wobei die vorbestimmte Nutzungsbedingung einen maximal zulässigen Fahrzeuggewichtswert und/oder einen festen Bremsleitungsdruck umfasst und wobei ein Erzeugen des Messwerts der aktuellen Fahrzeugbremswirkung ein Empfangen eines oder mehrerer Werte eines, einer beliebigen Kombination oder aller von Folgenden umfasst:
eine Wegstrecke für das Fahrzeug;
ein Gewicht, das von einem geprüften Fahrzeugrad getragen wird;
ein maximal zulässiges Gewicht für das geprüfte Rad oder Fahrzeug;
ein während der Prüfung angewendeter Bremsleitungsdruck;
eine während der Prüfung erreichte Verzögerungskraft.

4. Verfahren nach einem vorherigen Anspruch, wobei die Angabe einen Fahrzeugnutzungswert oder eine Grenze zum Ausführen einer weiteren Fahrzeugbremsprüfung umfasst, wobei der Nutzungswert an dem Überquerungspunkt oder ein vorbestimmter Betrag vor dem Überquerungspunkt bestimmt wird.

5. Verfahren nach einem vorherigen Anspruch, umfassend ein rückwirkendes Bestimmen eines Punkts, an dem die vorhergesagte Abnahme vorher den Schwellenwert überquert hat, und/oder ein rückwirkendes Bestimmen eines Ausmaßes von Fahrzeugnutzung, an dem die Bremsleistung unter dem Schwellenwert war.

6. Verfahren nach einem vorherigen Anspruch, wobei das mathematische Modell eine polynomiale Definition der Abnahme der Bremswirkung umfasst, wie z. B. ein Polynom erster oder zweiter Ordnung, und einen kontinuierlichen Pfad der Abnahme der Bremswirkung mit der Fahrzeugnutzung bereitstellt.

7. Verfahren nach einem vorherigen Anspruch, wobei die Abnahme der Bremswirkung als ein Abschnitt des Umfangs eines Kreises oder einer Ellipse modelliert ist.

8. Verfahren nach einem vorherigen Anspruch, wobei die Abnahme der Bremswirkung unter Verwendung einer Vielzahl von Messungen der Fahrzeugbremswirkung aus einer entsprechenden Vielzahl von verschiedenen Bremsprüfungen bestimmt wird, wobei die Abnahme durch das mathematische Modell als ein Pfad der besten Anpassung definiert wird, der die Vielzahl von Messungen der Fahrzeugbremswirkung integriert.

9. Verfahren nach einem vorherigen Anspruch, wobei das mathematische Modell und/oder der Pfad der Abnahme unter Verwendung eines weiteren Messwerts der Fahrzeugbremswirkung aus einer weiteren Bremsprüfung aktualisiert wird.

10. Verfahren nach Anspruch 9, wobei das mathematische Modell adaptiv ist und/oder den Pfad der Abnahme automatisch aktualisiert, um einen empfangenen weiteren Messwert der Fahrzeugbremswirkung zu berücksichtigen.

11. Verfahren nach einem vorherigen Anspruch, wobei ein Anwenden des mathematischen Modells ein Anwenden einer zuvor aufgezeichneten Abnahme der Bremswirkung umfasst, die für zuvor verwendetes Bremsreibungsmaterial erzeugt wird.

12. Verfahren nach einem vorherigen Anspruch, umfassend ein Aufzeichnen einer Aufbaurate von Verzögerungskraft, die durch die Fahrzeugbremse während der Fahrzeug-Bremsprüfung erzeugt wird.

13. System zum Management von Fahrzeugbremsleistung, umfassend:
ein oder mehrere Rollen-Bremsprüfsysteme für ein Fahrzeug, wobei das Rollen-Bremsprüfsystem angeordnet ist, um einen Messwert von aktueller Fahrzeugbremswirkung auszugeben;
einen Datenspeicher, umfassend Fahrzeugkennungen und ein Protokoll historischer Fahrzeugbremsprüfungsresultate für jede Fahrzeugkennung, wobei der Datenspeicher angeordnet ist, um mit Prüfungsergebnissen für jede Prüfung aktualisiert zu werden, die durch das Rollen-Bremsenprüfsystem ausgeführt wird; **gekennzeichnet durch**
eine Fahrzeugbrems-Überwachungseinrichtung, die angeordnet ist, um die Fahrzeugbrems-Prüfungsresultate zu empfangen und die Prüfungsresultate gemäß einem mathematischen Modell zu verarbeiten, um eine Abnahme der Bremswirkung mit der Fahrzeugnutzung vorherzusagen,
wobei die Fahrzeugbrems-Überwachungseinrichtung einen Punkt bestimmt, an dem die vorhergesagte Abnahme einen Schwellenwert der Fahrzeugbremswirkung überquert, und eine Angabe von Fahrzeugnutzung entsprechend dem Überquerungspunkt ausgibt.

14. Datenträger, umfassend maschinenlesbare Anweisungen zum Steuern einer Steuerung eines Fahrzeugbrems-Überwachungssystemsteuerung, um:
ein Fahrzeugbrems-Prüfungsresultat und eine assoziierte Fahrzeugkennung von einem oder mehreren Fahrzeug-Rollenbremsprüfsystemen zu empfangen;
aus einem Datenspeicher ein oder mehrere historische Fahrzeug-Bremsprüfungsresultate für die empfangene Fahrzeugkennung abzurufen;
das erhaltene Fahrzeug-Bremsprüfungsresultat und das eine oder die mehreren historischen Fahrzeug-Bremsprüfungsresultate gemäß einem mathematischen Modell zu verarbeiten, um eine Abnahme der Bremswirkung mit der Fahrzeugnutzung vorherzusagen; und
einen Punkt zu bestimmen, an dem die vorhergesagte Abnahme einen Schwellenwert der Fahrzeugbremswirkung überquert.

15. Fahrzeug-Rollenbremsenprüfstand, umfassend eine Steuerung und den Datenträger nach Anspruch 14.

## Revendications

1. Procédé de gestion des performances de freinage d'un véhicule, comprenant :
la réalisation d'un test de freinage de véhicule en utilisant un freinomètre à rouleaux afin d'émettre une ou plusieurs mesures de performances de freinage dans une ou plusieurs conditions de test ;
l'utilisation de ladite mesure de performances de freinage pour générer une valeur de l'efficacité de freinage actuelle du véhicule pour une condition d'utilisation prédéterminée ;
l'application d'un modèle mathématique à ladite valeur de l'efficacité de freinage actuelle du véhicule afin de prédire une baisse de l'efficacité du freinage avec l'utilisation du véhicule ;
la détermination via ledit modèle mathématique d'un point auquel ladite baisse prédite franchit une valeur seuil d'efficacité de freinage du véhicule ; et
l'émission d'une indication de l'étendue de l'utilisation du véhicule correspondant audit point de franchissement.

2. Procédé selon la revendication 1, dans lequel l'une ou plusieurs conditions de test comprennent une valeur de poids de véhicule et une valeur de pression de conduite de frein appliquée.

3. Procédé selon la revendication 2, dans lequel la condition d'utilisation prédéterminée comprend une valeur de poids de véhicule maximale autorisée et / ou une pression de conduite de frein fixe et dans lequel la génération de la mesure de l'efficacité de freinage actuelle du véhicule comprend la réception d'une ou plusieurs valeurs de l'un quelconque, d'une quelconque combinaison ou de la totalité parmi :
une distance de déplacement du véhicule; un poids porté par une roue de véhicule à l'essai ; un poids maximal autorisé pour la roue ou le véhicule à l'essai ; une pression de conduite de frein appliquée pendant l'essai ; la force de ralentissement obtenue pendant l'essai.

4. Procédé selon l'une quelconque des revendications précédentes, dans lequel ladite indication comprend une valeur ou une limite d'utilisation du véhicule pour réaliser un autre test de freinage du véhicule, la valeur d'utilisation étant déterminée audit point de franchissement ou à une quantité prédéterminée avant ledit point de franchissement.

5. Procédé selon l'une quelconque des revendications précédentes, comprenant la détermination rétrospective d'un point auquel ladite baisse prédite a précédemment franchi la valeur seuil et / ou la détermination rétrospective d'une étendue d'utilisation du véhicule à laquelle les performances de freinage étaient inférieures à la valeur seuil.

6. Procédé selon l'une quelconque des revendications précédentes, dans lequel le modèle mathématique comprend une définition polynomiale de la baisse de l'efficacité de freinage, telle qu'un polynôme du premier ou du second ordre et fournit une trajectoire continue de la baisse de l'efficacité de freinage avec l'utilisation du véhicule.

7. Procédé selon l'une quelconque des revendications précédentes, dans lequel la baisse de l'efficacité du freinage est modélisée comme une partie de la circonférence d'un cercle ou d'une ellipse.

8. Procédé selon l'une quelconque des revendications précédentes, dans lequel la baisse de l'efficacité de freinage est déterminée en utilisant une pluralité de mesures de l'efficacité de freinage du véhicule à partir d'une pluralité correspondante d'essais de freinage différents, ladite baisse étant définie par le modèle mathématique comme une trajectoire au meilleur ajustement incorporant ladite pluralité de mesures de l'efficacité de freinage du véhicule.

9. Procédé selon l'une quelconque des revendications précédentes, dans lequel ledit modèle mathématique et / ou trajectoire de baisse est mis à jour en utilisant une autre mesure de l'efficacité de freinage du véhicule à partir d'un autre test de freinage.

10. Procédé selon la revendication 9, dans lequel le modèle mathématique est adaptatif et / ou met à jour automatiquement la trajectoire de baisse pour s'adapter à une autre mesure reçue de l'efficacité de freinage du véhicule.

11. Procédé selon l'une quelconque des revendications précédentes, dans lequel l'application du modèle mathématique comprend l'application d'une baisse précédemment enregistrée de l'efficacité de freinage générée pour un matériau de friction de frein précédemment utilisé.

12. Procédé selon l'une quelconque des revendications précédentes, comprenant l'enregistrement d'un taux d'accumulation de la force de ralentissement générée par le frein du véhicule pendant l'essai de freinage du véhicule.

13. Système de gestion des performances de freinage de véhicule, comprenant :
un ou plusieurs systèmes de freinomètre à rouleaux pour un véhicule, ledit système de freinomètre à rouleaux étant conçu pour émettre une mesure de l'efficacité de freinage actuelle du véhicule ;
une mémoire de données comprenant des identifiants de véhicule et un journal des résultats de test de freinage de véhicule historiques pour chaque identifiant de véhicule, la mémoire de données étant conçue pour être mise à jour avec des résultats de test pour chaque test effectué par le système de freinomètre à rouleaux ; **caractérisé par**
une unité de surveillance de freinage de véhicule conçue pour recevoir les résultats de test de frein de véhicule et pour traiter les résultats de test conformément à un modèle mathématique afin de prédire une baisse d'efficacité de freinage avec l'utilisation du véhicule, dans lequel l'unité de surveillance de freinage de véhicule détermine un point auquel ladite baisse prédite franchit une valeur de seuil de l'efficacité de freinage du véhicule et émet une indication d'utilisation du véhicule correspondant audit point de franchissement.

14. Support de données comprenant des instructions lisibles par machine pour commander une unité de commande de système de surveillance de freinage de véhicule pour :
recevoir un résultat de test de freinage de véhicule et un identifiant de véhicule associé depuis un ou plusieurs systèmes de freinomètre à rouleaux de véhicule ;
récupérer à partir d'une mémoire de données un ou plusieurs résultats de test de freinage de véhicule historiques pour l'identifiant de véhicule reçu ;
traiter le résultat du test de freinage du véhicule reçu et l'un ou plusieurs résultats du test de freinage de véhicule historiques conformément à un modèle mathématique afin de prédire une baisse de l'efficacité du freinage avec l'utilisation du véhicule ; et
déterminer un point auquel ladite baisse prédite franchit une valeur seuil d'efficacité de freinage du véhicule.

15. Freinomètre à rouleaux de véhicule comprenant une unité de commande et le support de données selon la revendication 14.
